(19) Europäisches Patentamt
European Patent Office
Office européen des brevets

(11) **EP 4 266 139 A1**

(12) **EUROPEAN PATENT APPLICATION**

(43) Date of publication:
**25.10.2023 Bulletin 2023/43**

(21) Application number: **22168740.3**

(22) Date of filing: **19.04.2022**

(51) International Patent Classification (IPC):
***G05B 23/02*** *(2006.01)*

(52) Cooperative Patent Classification (CPC):
**G05B 23/0254;** G05B 2219/37351;
G05B 2219/37434; G05B 2219/37435

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Bühler AG**
**9240 Uzwil (CH)**

(72) Inventors:
• RIBI, Adrian
 9500 Wil (CH)
• DÜBENDORFER, Urs
 9244 Niederuzwil (CH)
• REICHERT, Thomas
 8050 Zürich (CH)

(74) Representative: **Page White Farrer**
**Bedford House**
**21a John Street**
**London WC1N 2BF (GB)**

(54) **MONITORING MACHINES**

(57) A method and apparatus for monitoring a machine with at least one rotating component are disclosed. In the method accelerometer data collected for the machine is received by a data processing apparatus. An ellipse descriptive of movement of the machine in time domain and/or frequency domain is determined based on the accelerometer data. At least one ellipse parameter defining the ellipse is then used in monitoring the machine.

Fig. 1

**Description**

The present disclosure relates to methods, apparatuses and computer program products for computer aided monitoring of machines, and more particularly use of accelerometer data in monitoring machines with at least one rotational component.

A machine with rotating components can be monitored for example for maintenance and safety reasons. Predictive maintenance aims to keep machinery in good running order and prevent failures that could slow the operation or even completely shut the machine down, cause damage, even a catastrophic failure, fire, and/or health and safety risks.

In accordance with certain prior art prior art arrangements specific machine conditions have been locally measured. The measurements can be manual. For example, during commissioning of a machine movements of the machine have been recorded on a piece of paper with a pencil mounted to the machine. The penand-paper analysis has then been used as a regular check of tracking the movement, for example every couple of weeks. Another example is monitoring of bearing conditions which can be tracked based on temperature sensors or noise sensors. Such sensors are typically provided for each bearing. Power and smoke have also been used as basis of monitoring. These techniques have also been used in various combinations.

According to an aspect there is provided a method for monitoring a machine with at least one rotating component by a data processing apparatus, the method comprising receiving accelerometer data collected for the machine, determining an ellipse descriptive of movement of the machine in time domain and/or frequency domain based on the accelerometer data, determining at least one ellipse parameter defining the ellipse, and using the at least one ellipse parameter in monitoring the machine.

According to another aspect there is provided a monitoring apparatus comprising at least one processor and at least one memory including a computer program code, the at least one memory and computer program code configured to, with the at least one processor, cause the apparatus at least receive accelerometer data collected for a machine with at least one rotating component, determine an ellipse descriptive of movement of the machine in time domain and/or frequency domain based on the accelerometer data, determine at least one ellipse parameter defining the ellipse, and use the at least one ellipse parameter in monitoring the machine.

In accordance with a more specific aspect the at least one ellipse parameter is determined by rotating the ellipse and moving the zero center point of the ellipse.

The at least one ellipse parameter may comprise the radius of the ellipse in x-coordinates and/or y-coordinates, the center point of the ellipse in x-coordinates and/or y-coordinates, and/or angle of transformation of the ellipse.

Further parameters may be derived from the at least one ellipse parameter. The further parameters can relate to weight and/or imbalance.

A change in at least one condition of the machine may be detected based on the monitoring. In response to the detecting control instructions can be generated.

The accelerometer data can be separated into sets of one or more rotations. Ellipses descriptive respective sets of rotations can be computed and ellipse parameters defining the ellipses descriptive the respective sets of rotations determined. The separating may comprise finding rotational cutting points for the separation based on low pass filtering wherein every second crossing of a zero point is determined as a cutting point. Alternatively, searching for local maxima to identify cutting points may be provided. The accelerometer data can then be separated into sets at the determined cutting points.

Accelerometer data for a machine can be generated by a single multi-axis accelerometer or at least two single axis accelerometers.

Accelerometer data can be received from a plurality of machines comprised in a system of machines. Said accelerometer data from the plurality of machines can be analysed and operation of the system monitored based on the analysis.

Further analysis may be provided based on data from the monitoring and data from a data storage. The data storage may comprises a record of data associated with the type of the machine. The further analysis may comprise mapping data from the storage to at least one condition and/or the at least one ellipse parameter determined for the machine based on the received accelerometer data.

The monitoring may comprise monitoring at least one of a drive, a belt, a bearing, a gear, a chain, a blade, and/or imbalance of the machine, weight distribution of the machine, changes in a mass flow, a tilt of the machine tilt, and/or a rod.

A computer software product embodying at least a part of the herein described functions may also be provided. In accordance with an aspect a computer program comprises instructions for performing the methods described herein.

Some aspects will now be described in further detail, by way of example only, with reference to the following examples and accompanying drawings, in which:

Figure 1 illustrates a schematic example of a system comprising a machine and a data processing apparatus;

Figure 2 is an example of a data processing apparatus;
Figures 3 and 4 show examples of rotational patterns underlying the examples;
Figures 5A and 5B illustrate plotting of an ellipse from raw accelerometer data; and
Figures 6 and 7 show flowcharts for operation according to certain examples.

The following description gives an exemplifying description of some possibilities to practise the invention. Although the specification may refer to "an", "one", or "some" examples or embodiment(s) in several locations of the text, this does not necessarily mean that each reference is made to the same example of embodiment(s), or that a particular feature only applies to a single example or embodiment. Single features of different examples and embodiments may also be combined to provide other embodiments.

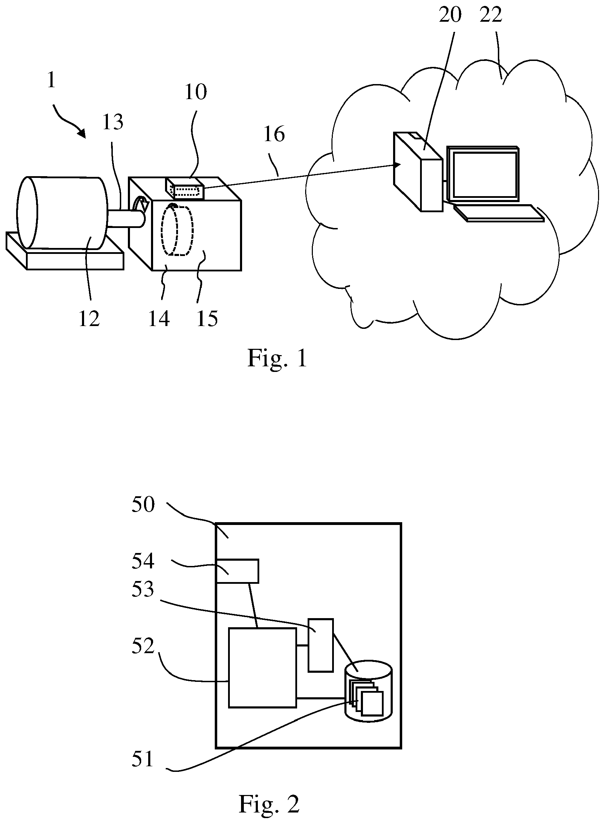

Figure 1 shows a schematic example of a machine 1 with at least one rotating component. The machine 1 comprises a drive 12 and a unit 14 driven by the drive. Internal component 15 of the unit is rotated by the drive via a shaft 13. The machine may be mounted on a flexible base. Machines can also be supported on hanging support arrangements.

Figure 1 shows further a sensor element providing an accelerometer 10 attached to the machine 1 such that it can measure vibrations on the machine. An advantage of vibration based monitoring is that vibrations caused by a developing condition typically emerge already in early stages. Changes in vibration patterns can be detected and action taken earlier than based on information from, e.g., heat, noise and smoke sensors. The modern accelerometers are sensitive enough to detect relatively small movements and changes, making use thereof a viable option.

Accelerometer unit 10 can comprise at least some processing capability 11 to generate accelerometer data. The data can be communicated to and is useable by a data processing apparatus 20 providing analysis and monitoring functions. The accelerometer 10 is connected via a data connection 16 to the data processing apparatus 20. The data connection 16 can be any suitable wired or at least partially wireless data connection. Data can be communicated from the accelerator 10 based on any appropriate data communication protocol.

Accelerometer data can be a single multi-axis accelerometer. According to a possibility the accelerometer unit 10 comprises at least two single axis accelerometers.

It is noted that although a single machine is shown in Figure 1, a monitored system can comprise a large number of machines and respective sensors connected to and monitored by a data processing apparatus. The data processing apparatus can be configured for monitoring a large scale production facility such as a factory or a chemical and/or food processing plant.

The data processing apparatus 20 can be comprise any suitable computer device, for example a maintenance server, configured to perform the monitoring and control functions as described herein. The data processing apparatus 20 can be connected to / be a part of a wider data communications system 22, such as an Intranet or the Internet. Functions of the data processor apparatus 20 can also be at least in part provided in a cloud or virtualized environment. Appropriate gateways can be provided between different networks and/or environments.

The data processing apparatus can comprise any appropriate computing arrangement comprising at least one processor, memory, software and internal circuitry and components necessary to perform the tasks configured to implement at least some of the herein described features. Figure 2 shows an example of internal components of a data processing apparatus arranged on a board 50 and comprising processor(s) 52, 53 and memory or memories 51. Figure 2 further shows connections between the elements of the apparatus and an interface 54 for connecting the data processing apparatus to the data communications system 22 and enabling data communications with the accelerometer 10. The at least one memory may comprise at least one ROM and/or at least one RAM. The apparatus may comprise other possible components for use in software and hardware aided execution of tasks it is designed to perform. The at least one processor can be coupled to the at least one memory. The at least one processor may be configured to execute an appropriate software code to implement one or more of the following aspects. The software code may be stored in the at least one memory.

The accelerometer 10 measures vibrations of the machine 1 and provides raw data to an analysis module of the data processing apparatus 20. The accelerometer 10 can be any suitable sensor capable of providing functions of an accelerometer, generating accelerometer data and communicating the generated accelerometer data to the data processing apparatus 20. A wide variety of suitable accelerometers are commercially available. Characteristic features of accelerometers include the internal sampling rate and the sampling output, i.e., reporting frequency. For example, accelerometers with internal sampling and output frequencies in the range over 500Hz can be used . More sensitive and capable accelerometers are also available.

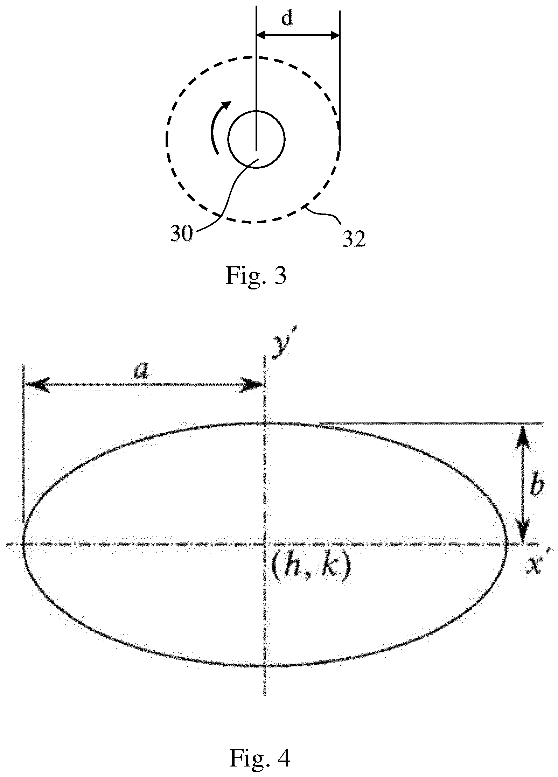

Figure 3 shows a schematic example of a rotating shaft 30 and its range of possible deviation d. Due to constant rotational movement there is no circular acceleration. Ideally, the acceleration is to the center to hold the shaft on circular path. However, any irregularity, imbalance, unnecessary weight or load, developed failure (e.g., worn out or damaged bearing, bent shaft, faulty belt or chain, blockage etc.) and so on may affect the balance and cause out of center acceleration (vibration). Such vibration can be measured by the accelerometer. Figure 3 shows by dashed line 32 the outer extreme of deviation. However, the deviation may not be circular but rather the machine vibrates along an ellipsoidal pattern.

An example for an ellipsoidal pattern and some parameters thereof that can be used in monitoring operation of a machine is shown in Figure 4. The ellipse parameters can comprise parameters such x-axis radius a, y-axis radius b, and centerpoint (h,k). Parameters such as the rotation angle can also be determined. Determining and use of these will be explained below.

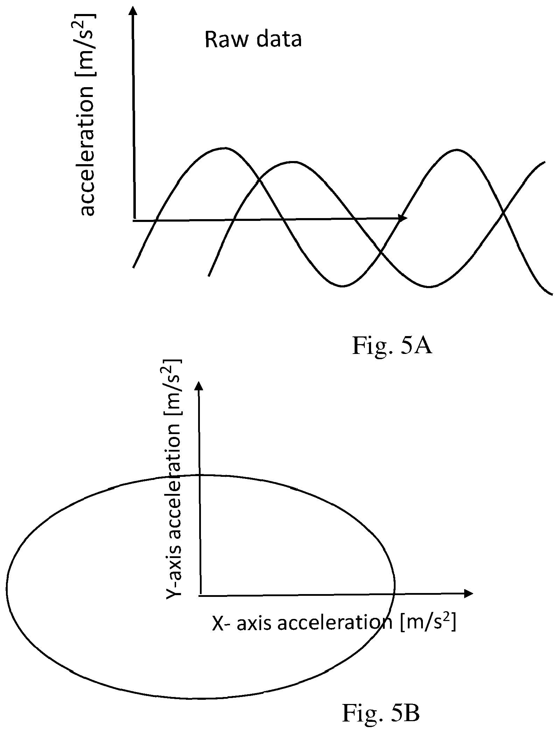

In accordance with an example raw acceleration data is measured in directions of x and y axis. Figure 5A shows the raw acceleration data as two 90 degrees shifted sinusoidal waveforms in time domain. One of the sinusoidal waves is for the x axis and the other is for the y axis. Figure 5B shows an ellipsoid plotted on xy coordinate system from the sinusoidal waveforms of Figure 5A.

Information of the ellipsoid can the utilised to provide an automated, low cost and reliable way to continuously monitor machine conditions based on accelerometer data. A number of conditions, even all conditions of interest, relating to a machine may be identified based on sensor apparatus comprising a single multi-axis accelerometer. Alternatively, a single axis accelerometer or multiple single axis accelerometers can be used as the source or accelerometer data.

Ability to identify and monitor machine conditions based on accelerometer data can be based on analysis of the accelerometer data in time domain. The analysis can comprise calculation and analysis of the ellipse parameters. In some applications further parameters derived from the ellipse parameters may be analysed.

Analysis can also be provided in frequency domain. The analysis can be provided solely in frequency domain. It is also possible to base the analysis on both the time domain and the frequency domain. The frequency domain analysis can be based on, for example, power spectral density analysis. The frequency domain based analysis can be used to complement the analysis result from the time domain analysis.

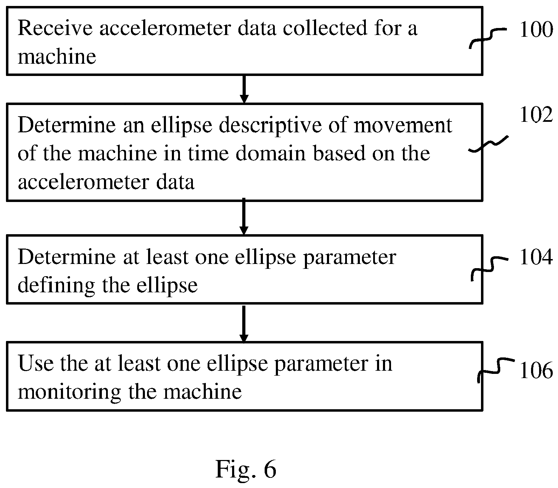

Figure 6 is a flowchart according to an example for a method of monitoring a machine with at least one rotating component. In the method accelerometer data collected for the machine is received at 100 by a processor apparatus. The apparatus then determines at 102 an ellipse that is descriptive of movement of the machine in time domain based on the received accelerometer data. At least one ellipse parameter defining the ellipse is defined at 104. The at least one ellipse parameter can then be used at 106 in analysis of the condition of the machine.

Determining of the at least one ellipse parameter may comprise rotating the ellipse and/or moving the zero center point of the ellipse. Further parameters may be derived from the at least one ellipse parameter. The further parameters may comprise for example parameters indicative of total weight and/or imbalance.

A change in at least one condition of the machine may be detected. In response to the detecting control instructions can be generated to react to the detected change. For example, the machine may be stopped, slowed down, load reduced, further diagnosis performed, and so on.

The accelerometer data can be separated into sets of rotations. A smallest set of rotations comprises a single rotation. Ellipses descriptive respective sets of rotations can be computed and ellipse parameters defining the ellipses for the sets determined.

The ellipses can be compared to analyse changes in the operation of the machine.

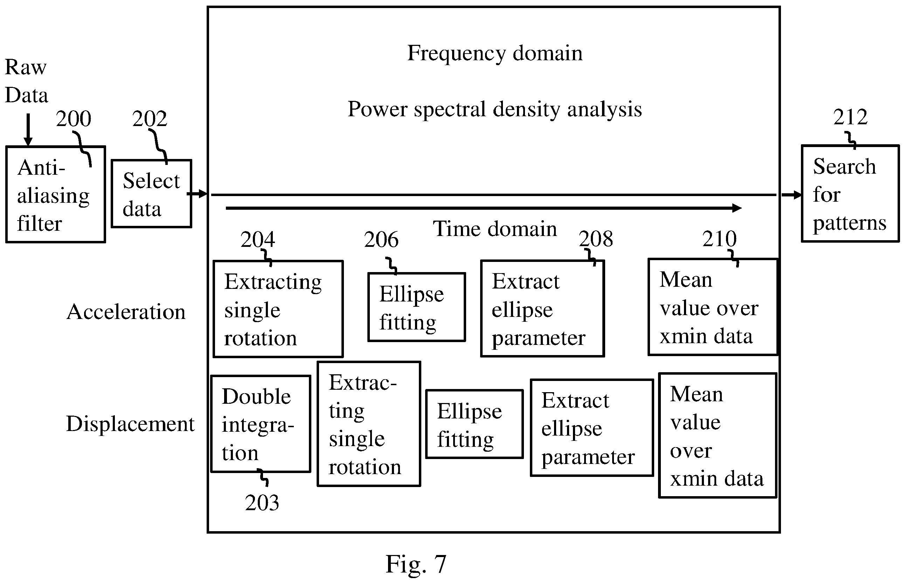

A more detailed example is shown in the flowchart of Figure 7. Evaluation of accelerometer data is based on analysis of the time domain. As shown, frequency domain may also be analysed. Frequency analysis can be performed for a selected part of the data based on a power spectral density analysis.

Raw data from the accelerometer can be pre-processed before the analysis. For example, a low pass filter with a predefined appropriate cut-off frequency can be applied at block 200 to avoid violating the sampling theorem. The cut-off frequency can depend on the circumstances. To give an example, the frequency can be around 200 Hz. The data acquisition can already have an analog antialiasing filter. To ensure proper cut-off an additional digital filter can be applied. Pre-processing of the raw data is dependent on the application and set-up and is not necessary in all implementations.

After filtering, the input data can be separated into different phases of operation of the machine. A settling phase can be set, for example, to be the first thirty minutes during which the machine steadies itself. The length of the steady state can be defined, e.g., based on earlier measurements. A stable phase where the movement has stabilised then follows. A swing-out phase occurs after the machine has been instructed to stop but is still moving. The following example focuses on the stable phase after the settling phase ends at 202, i.e., the phase between the settling phase and instructions for the engine to stop.

The data evaluation in the time domain focuses on extraction of information of how the machine moves and changes in the movement of the machine. The analysis may be based on analysis of acceleration and displacement.

The acceleration analysis operation can separate the acceleration data set into single rotations at 204. In the separation cutting points can be determined based on low-pass filtering or search for local maxima.

After the separation an ellipse is fit at 206 for each rotation. At this stage an ellipse is created from the accelerometer data that presents the movement of the machine. An example for computations to generate the ellipse is given below.

An ellipse parameter (or parameters) is extracted at 208 from each created ellipse. A parameter (or parameters) for each rotation or sets of rotations gives a series of comparable parameters.

A mean value can be created at 210 for each ellipse parameter over a predefined period. A number of rotations can be grouped into sets of rotations, and a mean ellipse generated for each set.

A displacement analysis may also be provided instead of or in addition to the acceleration analysis. Displacement analysis has an additional step 203 where double integration is provided. The displacement analysis gives distances (e.g., in millimeters or fractions thereof) rather than acceleration in $m/s^2$. Displacement analysis thus removes the time aspect.

Frequency domain based analysis may be provided in parallel with the the time domain analysis.

The output can be used by the analysing data processor entity at 212 in searching for patterns indicative of various conditions. The analysis can be based on comparison of determined patterns to a database of patterns indicative of various conditions. The conditions may be existing conditions or developing conditions. A detected condition may be determined to require a control action. The control action may be immediate (e.g., alarm, shut down, reduction of speed and/or load, increase in cooling and/or lubrication). Its also possible to make changes in the operational parameters that may take effect in longer term and to monitor the effects of the changes.

In the following an example of possible mathematical basis of ellipse prameter determination is explained. An ellipse can be described as a polynomial function:

$$c_1*x^2+c_2*xy+c_3*y^2+c_4*x+c_5*y=1 \qquad (1)$$

In accordance with an example the fitting of ellipse function can be based on application of the least square method.

$$\| A*x-b \|^2 \qquad (2)$$

Ellipse parameters a, b, centerpoint (h,k) and the rotation angle may not be directly identifiable in the original ellipse equation (1) above. To extract that data the ellipse is rotated with a main axis transformation and then moved to a zero center point. The ellipse equation can be formed by diagonalizing matrix A. Matrix A is symmetrical and can be diagonalized without a need for a further check. A transformation matrix can be used to transfer the quadric into another coordinate system.

$$x^T A x + u^T x = 1 \qquad (3)$$

This can be extended into

$$x^T T D T^T x + u^T T T^T x = 1 \qquad (4)$$

where

D is the diagonalised matrix of A, and
T is the transformation matrix.

For the coordination transformation another coordinate is needed:

$$x' = T^T x \qquad (5)$$

Including in the original equation this leads to

$$x'^T D x' + u^T T x' = 1 \qquad (6)$$

In the new coordinate system x' is the rotation of the ellipse eliminated and after calculation of D and T ellipse parameters can then be calculated. For example, the center points in x'-axis and original x-axis and angle of the transformation can be computed.

If the angle of the transformation is small the calculation can lead to numerical issues causing unnecessary complication without any real effect on the outcome. This can be addressed, if needed, by an appropriate check routine. The check may indicate that the calculations can be simplified because there is no real need of rotation.

Accelerometer based monitoring arranged according to the herein described principles has been tested for a machine comprising belt driven flour sieve stacks. Variables including different weights (0 - 140 Kg) on the sieves, symmetrical and asymmetrical loads, and different belt tensions were measured. Also, tests on effects of conditions such as door vibrations, missing preload and special measurements such as for occasions of a tilted rod, a loose rod and a cut rod were performed.

The behaviour of ellipse parameters a and *b* was found to be substantially similar in these measurements, e.g., both parameters showed a clear negative and similar linear trend with increasing weight on the sieve stacks. The asymmetrical loads also mapped well to the linear behaviour. The coordinates of the center point of the ellipse also showed similar behaviour of the a and b coordinates. Analysis on weight imbalance showed a clear deviation from the regular weight increase.

In general, evaluation of the time domain showed the ellipse parameters to have the capability of being indicative of the condition of the machine, and changes therein. Especially the ellipse radius a and b were considered informative. A further optimization was achieved by further parameters for conditions such as the total weight and imbalance. Based on the results the impact of the total weight was on the changed diameter of the circular movement. On the other hand, the imbalance influenced the ellipticity of the movement.

It is possible to be better separate the effects by defining a weight factor and an imbalance factor. The weight factor can enable calculation of what can be the minimal detectable weight by considering the standard deviation of all datapoints. Imbalance factor can be useable in detecting of imbalanced weight distribution. An observation regarding the imbalance factor in the tests was that with evenly distributed weight on sieves the deviation was negligent. In theory all measurement points should build a horizontal line representing that a symmetrically loaded machine performs an almost perfect circular movement. Any imbalance can be detected as a variation of this.

Accelerometer data can be received at a central data processing entity from a plurality of machines. The machines can be comprised in a system of machines, for example a production plant. The accelerometer data from the plurality of machines can be analysed and monitoring operation of the plant can be based at least in part on the analysis of the accelerator data from a plurality of sensors and associated machines.

Analysis can be based on data provided by the monitoring and data from a data storage. For example, data collected for a particular type of machinery may be used. The data storage may comprise a library of maintenance data associated with the type of the machine or machines, and the analysis may comprise looking for data corresponding to at least one condition and/or the at least one ellipse parameter determined for the machine or machines of the type based on the received accelerometer data. Any deviations from the expected can be processed and necessary corrective action taken.

It is thus possible, e.g., to monitor a process line comprising multiple of machines and can optimize the overall process and/or maintenance thereof.

For an easier separation of the functions based on the acceleration data (which can be a superimposed signal of all vibrations) other sensor technologies can be attached. For example, a power meter to measure the drive current (mass flow changes, drive status) and temperature probes on drive(s) and the bearings may be provided. For example, temperature information can be helpful because information about temperature is easy to obtain and process, and temperature increase is one of the easy indicative parameters to understand and use in determining the status of the machine.

The machine to be monitored can comprise any machine with at least one rotating component. The herein disclosed principles can be used for variety of monitoring applications, for example for drive monitoring, belt monitoring (for example status of belt, belt tension and so on), drive chain monitoring, bearing monitoring, gear monitoring, pump or fan blade monitoring, imbalance and weight distribution monitoring, machine tilt monitoring, lose rod monitoring, monitoring of mass flow change, monitoring for loose components, and so forth may be provided.

An efficient and reliable way to identify and measure machine conditions may be provided by the herein disclosed arrangement. A low-cost sensor arrangement for measuring and identifying relevant conditions of a machine or machines may be provided. Early notification of a potential machine failure may be provided. Overall maintenance costs may be reduced and predictive maintenance and maintenance planning made more efficient. A capability to analyse data both locally in the site where the machine is located and centrally in a remote location may be provided. Ability to timely react to changes in machine conditions may be provided. Deeper insights in a process and conditions affecting the machinery involved in the process may be provided. Process optimization may be provided.

It is noted that although the above detailed examples have been described with reference to certain applications and machines there are several variations and modifications which may be made to the disclosed solution without departing from the scope of the present invention. In particular, the different embodiments have been described as examples. Different features from different embodiments may be combined.

In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor or by hardware, or by a combination of software and hardware. Further in this regard it should be noted that any of the above procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples. While certain aspects of the invention may be illustrated and described as block diagrams, flow charts, or using some other schematic pictorial representation, it is well understood that these blocks, apparatus, systems, techniques and methods described herein may be implemented at least in part in, as non-limiting examples, hardware, software, firmware, special purpose circuits or logic, general purpose hardware or controller or other computing devices, or some combination thereof.

The foregoing description provides by way of exemplary and non-limiting examples a full and informative description of exemplary embodiments of the invention. However, various modifications and adaptations may become apparent to those skilled in the relevant arts in view of the foregoing description, when read in conjunction with the accompanying drawings and the appended claims. All such and similar modifications of the teachings of this invention will still fall within the scope of this invention.

**Claims**

1. A method for monitoring a machine with at least one rotating component by a data processing apparatus, the method comprising:

   receiving accelerometer data collected for the machine,
   determining an ellipse descriptive of movement of the machine in time domain and/or frequency domain based on the accelerometer data,
   determining at least one ellipse parameter defining the ellipse, and
   using the at least one ellipse parameter in monitoring the machine.

2. The method of claim 1 wherein the determining of the at least one ellipse parameter comprises rotating the ellipse and moving the zero center point of the ellipse.

3. The method of claim 1 or 2 wherein the at least one ellipse parameter comprises the radius of the ellipse in x-coordinates and/or y-coordinates, the center point of the ellipse in x-coordinates and/or y-coordinates, and/or angle of transformation of the ellipse.

4. The method of any preceding claim comprising deriving further parameters from the at least one ellipse parameter, wherein the further parameters relate to weight and/or imbalance.

5. The method of any preceding claim comprising detecting a change in at least one condition of the machine based on the monitoring and in response to the detecting generating control instructions.

6. The method of any preceding claim comprising separating the accelerometer data into sets of one or more rotations, computing ellipses descriptive respective sets of rotations, and determining ellipse parameters defining the ellipses descriptive the respective sets of rotations.

7. The method of claim 6 wherein the separating comprises finding rotational cutting points for the separation based on low pass filtering wherein every second crossing of a zero point is determined as a cutting point or searching for local maxima to identify cutting points, and the accelerometer data is separated into sets at the determined cutting points.

8. The method of any preceding claim wherein the accelerometer data for the machine is generated by a single multi-axis accelerometer or at least two single axis accelerometers.

9. The method of any preceding claim comprising receiving accelerometer data from a plurality of machines comprised in a system of machines, analysing said accelerometer data from the plurality of machines, and monitoring operation of the system based on the analysis.

10. The method of any preceding claim comprising further analysis based on data provided by the monitoring and data from a data storage.

11. The method of claim 10, where the data storage comprises a record of data associated with the type of the machine, the further analysis comprising mapping data from the storage to at least one condition and/or the at least one ellipse parameter determined for the machine based on the received accelerometer data.

12. The method of any preceding claim wherein the monitoring comprises monitoring at least one of a drive, a belt, a bearing, a gear, a chain, a blade, and/or imbalance of the machine, weight distribution of the machine, changes in a mass flow, a tilt of the machine tilt, and/or a rod.

13. A monitoring apparatus comprising at least one processor and at least one memory including a computer program code, the at least one memory and computer program code configured to, with the at least one processor, cause the apparatus at least:

   receive accelerometer data collected for a machine with at least one rotating component,
   determine an ellipse descriptive of movement of the machine in time domain and/or frequency domain based on the accelerometer data,
   determine at least one ellipse parameter defining the ellipse, and
   use the at least one ellipse parameter in monitoring the machine.

14. The apparatus of claim 13 configured to perform the method of any of claims 2 to 12.

15. A computer readable media comprising program code for causing a processor to perform instructions for a method as claimed in any of claims 1 to 12.

Fig. 1

Fig. 2

Fig. 3

Fig. 4

Fig. 5A

Fig. 5B

Receive accelerometer data collected for a machine ⟶ 100

Determine an ellipse descriptive of movement of the machine in time domain based on the accelerometer data ⟶ 102

Determine at least one ellipse parameter defining the ellipse ⟶ 104

Use the at least one ellipse parameter in monitoring the machine ⟶ 106

Fig. 6

Fig. 7

EP 4 266 139 A1

Europäisches
Patentamt

European
Patent Office

Office européen
des brevets

# EUROPEAN SEARCH REPORT

**Application Number**

EP 22 16 8740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/369612 A1 (ZHA YANG [US] ET AL) 22 December 2016 (2016-12-22) * paragraph [0003] * * paragraph [0010] - paragraph [0011] * * paragraph [0021] - paragraph [0024] * * paragraph [0029] - paragraph [0041] * * figures 1-7 * | 1-10, 12-15 | INV. G05B23/02 |
| X | CN 104 198 138 B (BEIJING TIANYUAN CREATION WINDPOWER TECHNOLOGY CO LTD) 22 March 2017 (2017-03-22) * paragraph [0007] - paragraph [0014] * * paragraph [0022] - paragraph [0050] * * figures 1,2 * | 1-3,5,6, 8-15 | |
| X | RU 2 658 233 C1 (OBSHCHESTVO S OGRANICHENNOJ OTVETSTVENNOSTYU NPTS DINAMIKA NAUCHNO PRO) 19 June 2018 (2018-06-19) * page 5, lines 1-4 * * page 5, line 33 - page 6, line 31 * * page 6, line 38 - page 11, line 24 * * page 13, lines 9-16 * * figures 1,2 * | 1-3,5,6, 8-15 | |
| X | US 2011/198440 A1 (SAUCRAY JEAN-MICHEL [FR] ET AL) 18 August 2011 (2011-08-18) * paragraph [0001] * * paragraph [0009] - paragraph [0021] * * paragraph [0025] - paragraph [0027] * * paragraph [0031] * * paragraph [0033] - paragraph [0034] * * paragraph [0044] * * paragraph [0052] - paragraph [0065] * * paragraph [0068] * * paragraph [0073] - paragraph [0080] * * figures 1-11 * | 1,3-5, 8-10, 12-15 | **TECHNICAL FIELDS SEARCHED (IPC)** E21B G01M B64D G05B |

The present search report has been drawn up for all claims

| Place of search | Date of completion of the search | Examiner |
|---|---|---|
| Munich | 8 October 2022 | Hristov, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 8740

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2022

| Patent document cited in search report | | Publication date | Patent family member(s) | | Publication date |
|---|---|---|---|---|---|
| US 2016369612 | A1 | 22-12-2016 | AU 2016278985 | A1 | 18-01-2018 |
| | | | CA 2988794 | A1 | 22-12-2016 |
| | | | CN 108026765 | A | 11-05-2018 |
| | | | CO 2017012970 | A2 | 05-01-2018 |
| | | | EP 3310997 | A1 | 25-04-2018 |
| | | | MY 184245 | A | 29-03-2021 |
| | | | US 2016369612 | A1 | 22-12-2016 |
| | | | WO 2016205706 | A1 | 22-12-2016 |
| CN 104198138 | B | 22-03-2017 | NONE | | |
| RU 2658233 | C1 | 19-06-2018 | NONE | | |
| US 2011198440 | A1 | 18-08-2011 | BR PI0916290 | A2 | 19-07-2016 |
| | | | CA 2731960 | A1 | 28-01-2010 |
| | | | CN 102159463 | A | 17-08-2011 |
| | | | EP 2303694 | A2 | 06-04-2011 |
| | | | FR 2934246 | A1 | 29-01-2010 |
| | | | JP 2011528645 | A | 24-11-2011 |
| | | | RU 2011106754 | A | 27-08-2012 |
| | | | US 2011198440 | A1 | 18-08-2011 |
| | | | WO 2010010292 | A2 | 28-01-2010 |

EPO FORM P0459

For more details about this annex : see Official Journal of the European Patent Office, No. 12/82